# EUROPEAN PATENT SPECIFICATION

(11) **EP 3 513 924 B1**
(45) Date of publication and mention of the grant of the patent: **16.09.2020**
(21) Application number: 19151399.3
(22) Date of filing: 11.01.2019
(51) Int. Cl.: B26B 21/40, B26B 19/38

(54) **METHOD FOR GENERATING USER FEEDBACK INFORMATION FROM A SHAVE EVENT**
VERFAHREN ZUR ERZEUGUNG VON BENUTZERFEEDBACKINFORMATION VON EINEM RASIEREREIGNIS
PROCÉDÉ DE GÉNÉRATION D'INFORMATIONS DE RÉTROACTION D'UTILISATEUR À PARTIR D'UN ÉVÉNEMENT DE RASAGE

(30) Priority: 19.01.2018 US 201815875200
(43) Date of publication of application: 24.07.2019
(73) Proprietor: The Gillette Company LLC, Boston, Massachusetts 02127 (US)
(72) Inventor: Robinson, Susan Clare, Reading, Berkshire RG2 0QE (GB); Amavasai, Balasundram Periasamy, Reading, Berkshire RG2 0QE (GB); Barker, Matthew Lloyd, Mason, Ohio OH45040 (US); Budds, Kate, Reading, Berkshire RG2 0QE (GB); Good, Ian Anthony, Reading, Berkshire RG2 0QE (GB); Hinkle, Robert Thomas, Cincinnati, Ohio 45202 (US); Sherman, Faiz Feisal, Cincinnati, Ohio 45202 (US); Weston, Nigel, Reading, Berkshire RG2 0QE (GB)
(74) Representative: P&G Patent Germany

(56) References cited:
- WO-A1-2015/068068
- WO-A1-2016/094327
- WO-A1-2017/032547
- US-A1- 2017 097 758

## Description

### FIELD OF THE INVENTION

The present invention relates to the field of Internet of Things (IoT) and connected personal appliances and more particularly to a method for generating user feedback information from a shave event associated with a user.

### BACKGROUND OF THE INVENTION

There are numerous personal appliances used by consumers every day. Examples of such personal appliances include but are not limited to shaving razors, electric shavers, epilators, body scrubbers, toothbrushes and hair brushes. Proper usage techniques of such personal appliances facilitate the overall efficacy of the product providing the user with a more positive experience than he or she would have otherwise experienced. Such positive usage experiences will likely lead to continued product usage. Providing the user with information about proper usage techniques for using personal appliance has been limited.

Razors with sensors have been used to provide information to the user. Razors with proximity sensors or cameras have been used to provide information on blade attrition. Razors with force sensors have been used to provide the user with information on the amount of force being applied to the skin. By tracking the force being applied during the shave provides a metric to gauge blade dulling and predict blade attrition. Razors having sensors to count shaving strokes have been used to again assist with gauging blade attrition. Cameras have been used to provide users with boundary indicators such as distinguishing between areas of long hair such as side burns adjacent to areas of shorter hair length.

WO 2017/032547 A1 discloses a method, a personal care system and a shaving device for providing staged shaving advice. Personal assessment data is provided by the user and usage data from a shaving device is provided as input data for a logic associating shaving related data with corresponding shaving advice instructions. Based on an analysis of this input data, the logic determines a shaving advice instruction among a plurality of shaving advice instructions which is presented to the user.

WO 2015/068068 A1 discloses a programmable hair trimming system comprising a tracking system for detecting the position of a hair trimming device in relation to a client's head, a computer system for relating said position to a previously generated hair length profile data file and automatically and dynamically adjusting a length regulation mechanism of said hair trimming device according to the hair trimmer position data and the hair length profile data file, wherein the tracking system comprises one or more cameras and sensors such as accelerometers and/or gyroscopes and/or magnetometers for detecting the position, orientation and motion of both said hair trimming device and a client's head.

While these existing sensors do assist in providing the user with some basic information they fall well short of providing the usage information needed for an improved shave. To provide the user with the necessary usage information for an improved shave, the razor or personal appliance needs to have sensors that provide the user with useful information and/or data about the user's shave. With the useful information and/or data about user's shave the user can see how he or she is shaving and can discover ways to improve the shave.

### SUMMARY OF THE INVENTION

The present invention relates to a method for generating user feedback information from a shave event associated with a user according to claim 1. A shaving razor is provided to a user. The shaving razor comprises a handle comprising a connecting structure; a hair cutting implement comprising at least one blade, the hair cutting implement being connected to the connecting structure; at least one motion sensor associated with the handle; a communication device associated with the handle; and a power source associated with the handle. The at least one motion sensor and the communication device are powered via the power source. User profile data is collected from the user. Shave event data associated with the user during a shave is collected from the at least one motion sensor. The shave event data and user profile data is processed to generate user feedback information.

The user feedback information may comprise at least one of the following, a quantity of shaving strokes taken, a type of shaving stroke taken, a direction a shaving stroke was taken, a length of a shaving stroke, a location on a user's body where a shave stroke is taken, a pressure/load exerted during a shave stroke, a speed of a shave stroke, a temperature of the water used during the shave, a time of day when the shave is taken, a total amount of time taken for the shave, a total contact time between the hair cutting implement and the user, a frequency that the user shaves, a sequence in which shaving strokes are taken, a shave stroke map, a count of upward strokes taken, a count of downward strokes taken, a count of the strokes taken with the hair grain, a count of the strokes taken against the hair grain, a count of the number of hair cutting implement rinses, an ejection of the hair cutting implement, a usage status of the hair cutting implement, and an attachment of a new hair cutting implement to the handle.

The method may further comprise the step of communicating the user feedback information to the user. The user feedback information may be communicated to the user during the shave event or after the shave event. The user feedback information may be communicated to a computing device. The computing device may comprise a mobile device, a tablet, a handheld device and/or a desktop device. The desktop device may take the form of a base for holding the shaving razor. The base may include an LED display or any communication device allowing for communication with the user. The base may also be used to re-charge the shaving razor.

The method further comprises the step of recommending a behavior to the user. The recommendation may be communicated to a computing device. The computing device may comprise a mobile device, a tablet, a handheld device and/or a desktop device. The desktop device may take the form of a base for holding the shaving razor. The recommended behavior comprises a maintenance of a user's behavior, a maintenance of a user's shave habit, a change in a user's shave habit, a change in the product to use prior to shaving, a change in the product to use after shaving, a change in the product to use during shaving, a change in the direction a shaving stroke is taken, a change in the length of a shaving stroke, a change in the number of shaving strokes taken, a change in the pressure/load applied during a shave stroke, a change in the speed of a shave stroke taken, a change in the location where the user shaves, a change in the amount of time taken to prepare the skin and hair for shaving, a change in the temperature of the water used during shaving, a change in the temperature of the water used to prepare the user's skin for shaving, a change in the time of day when the user shaves, a change in the frequency in which the user shaves, a change in the type of hair cutting implement being used during the shave, a change to a new hair cutting implement, a change in the product used on the skin between shaves, a change in the order of location on the body in which strokes are taken, and a change in the area of the user's body to be shaved.

The at least one motion sensor may comprise an acceleration sensor, an angular velocity sensor, and/or a magnetic field sensor.

The shaving razor may further comprise a hair cutting implement displacement sensor associated with the handle. The hair cutting implement displacement sensor measures a displacement of the hair cutting implement relative to a fixed position of the handle. The hair cutting implement displacement sensor may comprise a switch, a magnetometer, a Hall Effect sensor, a capacitive sensor, an optical sensor, a load sensor, and/or a displacement sensor.

The shaving razor may further comprise a barometric pressure sensor associated with the handle.

The shaving razor may further comprise at least one temperature sensor associated with the handle. The at least one temperature sensor may comprise a thermistor.

The power source may comprise a rechargeable battery, a disposable battery or a corded electrical connection.

The shaving razor may comprise one or more sensors associated with the hair cutting implement. The one or more sensors associated with the hair cutting implement may comprise a switch, an acceleration sensor, a magnetic field sensor, an angular velocity sensor, a velocity sensor, a distance sensor, a proximity sensor, a displacement sensor, a capacitive sensor, an electrical conductance sensor, an electrical resistance sensor, an electrical current sensor, a load sensor, a strain sensor, a friction sensor, a fluid flow sensor, pressure sensor, an atmospheric pressure sensor, a temperature sensor, an optical sensor, an infrared sensor, an acoustic sensor, a vibration sensor, a humidity sensor, a chemical sensor, a particle detector, a bio sensor, an RFID sensor, a NFC sensor, and/or a wireless receiver.

The method may further comprise a sensor for detecting the presence of the hair cutting implement on the handle.

The user profile data may comprise at least one of the following, a location where the user shaves, an order of shaving relative to bathing and/or showering, a coverage of facial hair, a density of facial hair, a texture of facial hair, a speed at which facial hair grows, a direction of hair growth on a zone of the face, a condition of the users skin, an experience with skin irritation as a result of shaving, an experience with skin redness as a result of shaving, an experience with skin dryness as a result of shaving, an experience with skin tightness as a result of shaving, an experience with ingrown hairs, an experience with razor bumps, an experience with missed hairs when shaving, an experience with not getting close when shaving, an experience with discomfort during shaving, an experience with tug and pull during shaving, a number of typical shaves achieved with the hair cutting implement, a frequency at which the user changes the hair cutting implement, a picture of the user, aspects of their shave experience they would like to improve, a regimen of products used for shaving, an amount of time used with a product for shaving, and a rating of a shave event.

### BRIEF DESCRIPTION OF THE DRAWINGS

While the specification concludes with claims particularly pointing out and distinctly claiming the subject matter which is regarded as forming the present invention, it is believed that the invention will be better understood from the following description which is taken in conjunction with the accompanying drawings in which like designations are used to designate substantially identical elements, and in which:
Fig. 1 is a plan diagram of the method of the present invention.
Fig. 2 is an exploded partial cut away view of a shaving razor.
Fig. 3 is a cut away view of a shaving razor showing the displacement sensor.
Fig. 4 is a plan diagram of the user feedback information.
Fig. 5 is a plan diagram of the recommended behaviors.
Fig. 6 is a plan diagram of the user profile data.
Fig. 7 is a partial cut away view of a handle for a shaving razor.

### DETAILED DESCRIPTION OF THE INVENTION

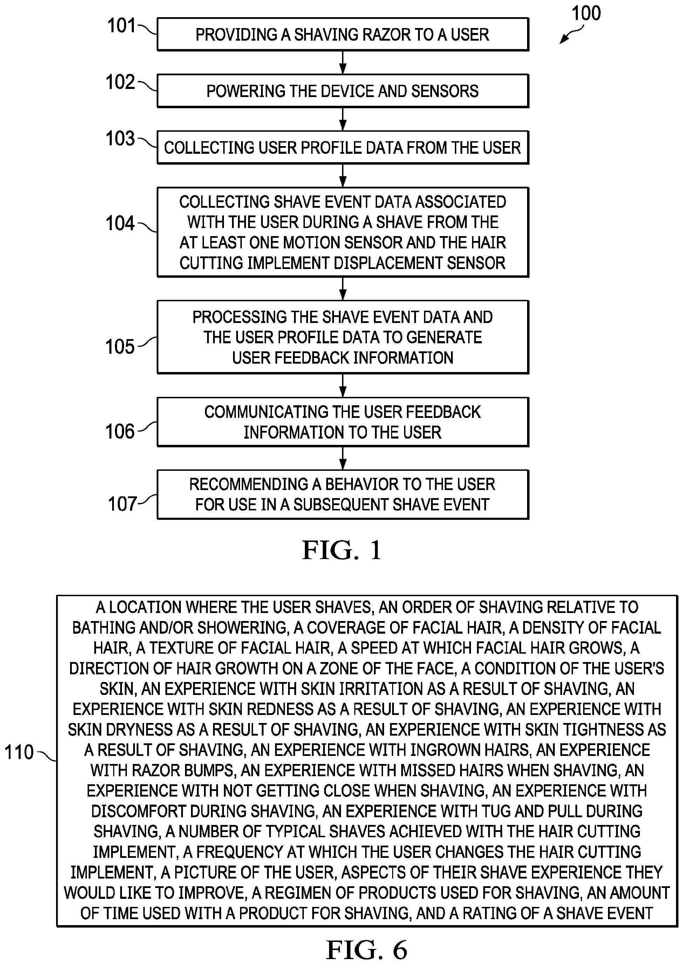

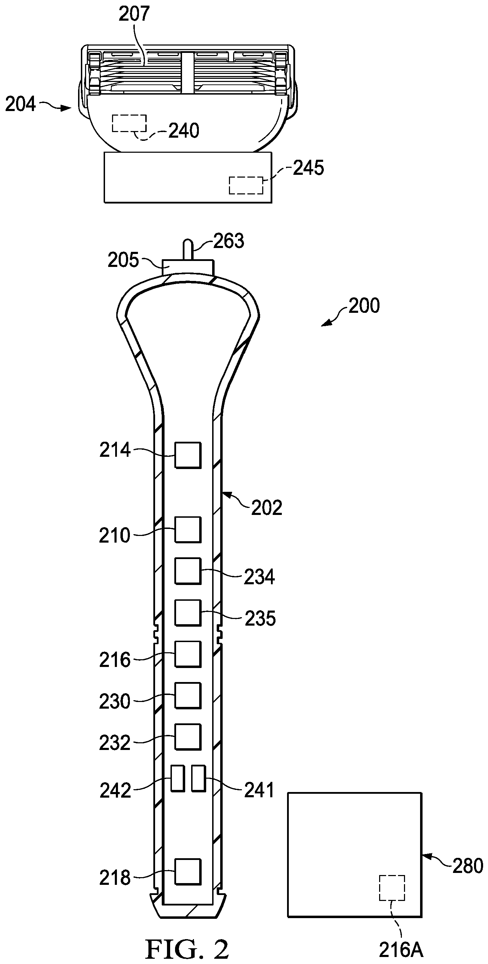

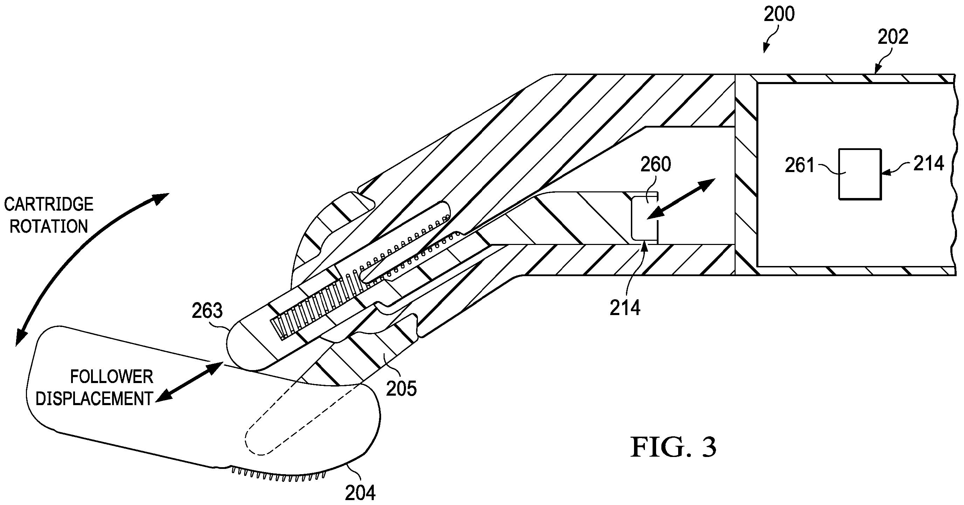

Referring now to Fig. 1 there is shown a plan diagram 100 of a method for generating user feedback information from a shave event associated with a user and from user profile data of the present invention. A shaving razor is provided to a user at 101. Referring now to Figs. 2 and 3, the shaving razor 200 comprises a handle 202. The handle 202 comprises a connecting structure 205. A hair cutting implement 204 is connected to the connecting structure 205. The hair cutting implement 204 includes at least one blade 207 for cutting hair. Any number of blades 207 may be used for a hair cutting implement design. The hair cutting implement may comprise a wet shaving cartridge or a dry shaving head.

At least one motion sensor 210 is associated with the handle. The at least one motion sensor is positioned in the handle. Suitable motion sensors include but are not limited to an acceleration sensor such as an accelerometer, an angular velocity sensor such as a gyroscope, and a magnetic field sensor.

An optional hair cutting implement displacement sensor 214 may be associated with the handle. The hair cutting displacement sensor 214 is positioned in the handle. The hair cutting implement displacement sensor 214 measures a displacement of the hair cutting implement 204 relative to a fixed position of the handle 202. The hair cutting implement displacement sensor 214 may take on many forms. Suitable hair cutting implement displacement sensors 214 comprise a magnetometer, an optical sensor, a switch, a Hall Effect sensor, a capacitive sensor, a load sensor and a displacement sensor. The hair cutting implement displacement sensor 214 is useful to detect and measure contact of the implement with a user's body. During use of shaving razor 200 the hair cutting implement displacement sensor 214 located in handle 202 detects and measures contact of hair cutting implement 204 with a user's body. Such contact measurement is an indication that the shaving razor 200 is in use as the hair cutting implement 204 is in contact with the user's body.

The hair cutting implement displacement sensor 214 comprises a magnet 260 embedded in follower 263 and a magnetometer 261 contained within handle 202. As the user shaves, hair cutting implement 204 rotates or pivots as it contacts the users skin. As the hair cutting implement 204 rotates it pushes on follower 263 causing follower 263 to move inward into handle 202. As follower 263 moves inward into handle 202, magnet 260 moves closer to magnetometer 261. Follower 263 converts the rotational movement of the hair cutting implement 204 into a displacement of the magnet 260 relative to handle 202. The amount of displacement of follower 263 directly correlates to the rotational displacement of hair cutting implement 204 relative to a fixed position on handle 202. The implement displacement sensor 214 measures the change in magnetic field associated with the movement of magnet 260 relative to magnetometer 261.

While the hair cutting implement displacement sensor 214 measures a linear displacement of magnet 260 relative to a fixed position on handle 202, hair cutting implement displacement sensor 214 can also be used to determine a rotational displacement of hair cutting implement 204 relative to a fixed position on handle 202.

A communication device 216 is associated with the handle 202. The communication device 216 is positioned in the handle. The communication device 216 may take on many forms. Suitable communication devices 216 comprise an LED display, an LCD display, a wired connection, a memory card which may be removable, a vibration device, a microphone, an audio device and/or a wireless connection such as, a Wi-Fi connection, a SIM card with GSM connection, a Bluetooth transmitter, a Li-Fi connection, and an infra-red transmitter. The communication device 216 allows the shaving razor 200 to communicate with a user and/or a second device 280. The user can select the desired type or intensity of the communication. For example, the user can select the color, the level of vibration, or the volume of sound. The communication with a second device 280 may be wirelessly through a cloud architecture and wirelessly to the second device. The communication may be directly to the second device. The second device 280 may be a mobile phone, a computer application, a computer or an electronic device. The second device 280 has a communication device 216A for communicating with communication device 216. The communication device 216A may be the same or different than the communication device 216. Communication device 216A may also communicate directly with the user. The communication device 216 may be mounted in the handle such that it is visible to the user. For example, the communication device may comprise an LED display mounted in the handle that is visible to the user providing direct communication to the user.

A power source 218 is associated with the handle 202. The power source is positioned in the handle. The power source 218 may take on many forms. Suitable power sources 218 comprise a rechargeable battery, a disposable battery and a corded electrical connection. The power source 218 powers the various sensors and devices located in the handle 202 requiring power to operate. The power source may power the at least one motion sensor 210, the hair cutting implement displacement sensor 214 and/or the communication device 216.

Referring again to Fig. 1, the devices and sensors are powered at 102. The devices and sensors include the at least one motion sensor 210, the optional hair cutting implement displacement sensor 214 and the communication device 216 all of which are powered via the power source 218.

At 103 user profile data is collected from the user. Details of the user profile data is shown in Fig 6. The user profile data comprises at least one of the following, a location where the user shaves, an order of shaving relative to bathing and/or showering, a coverage of facial hair, a density of facial hair, a texture of facial hair, a speed at which facial hair grows, a direction of hair growth on a zone of the face, a condition of the users skin, an experience with skin irritation as a result of shaving, an experience with skin redness as a result of shaving, an experience with skin dryness as a result of shaving, an experience with skin tightness as a result of shaving, an experience with ingrown hairs, an experience with razor bumps, an experience with missed hairs when shaving, an experience with not getting close when shaving, an experience with discomfort during shaving, an experience with tug and pull during shaving, a number of typical shaves achieved with the hair cutting implement, a frequency at which the user changes the hair cutting implement, a picture of the user, aspects of their shave experience they would like to improve, a regimen of products used for shaving, an amount of time used with a product for shaving, and a rating of a shave event.

At 104 shave event data associated with the user during a shave is collected. The shave event data includes data from the at least one motion sensor 210 and may include data from the hair cutting implement displacement sensor 214.

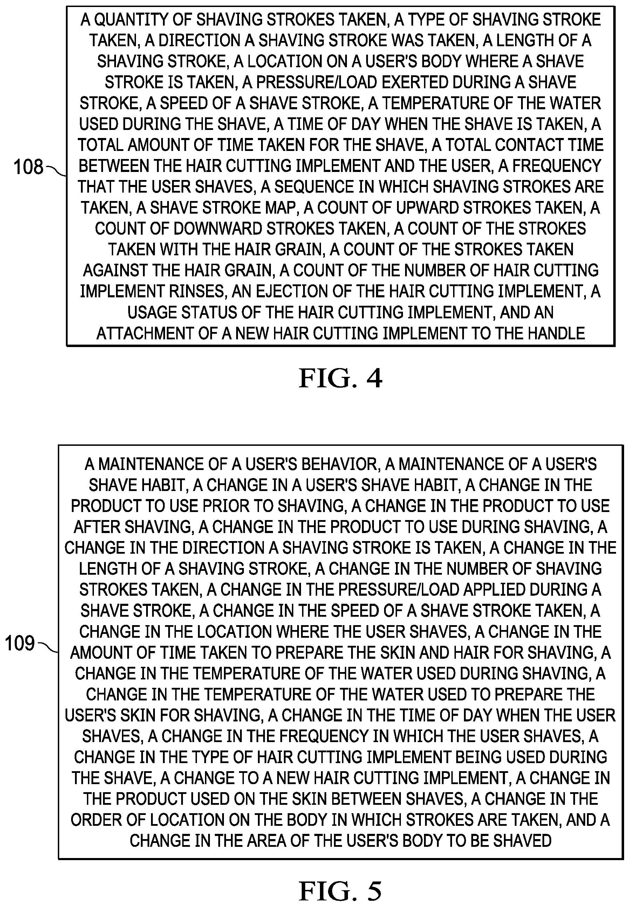

At 105 the shave event data and user profile data are processed to generate user feedback information. Referring now to Fig 4. details of the user feedback are provided at 108. The user feedback information 108 comprises at least one of the following, a quantity of shaving strokes taken, a type of shaving stroke taken, a direction a shaving stroke was taken, a length of a shaving stroke, a location on a user's body where a shave stroke is taken, a pressure/load exerted during a shave stroke, a speed of a shave stroke, a temperature of the water used during the shave, a time of day when the shave is taken, a total amount of time taken for the shave, a total contact time between the hair cutting implement and the user, a frequency that the user shaves, a sequence in which shaving strokes are taken, a shave stroke map, a count of upward strokes taken, a count of downward strokes taken, a count of the strokes taken with the hair grain, a count of the strokes taken against the hair grain, a count of the number of hair cutting implement rinses, an ejection of the hair cutting implement, and an attachment of a new hair cutting implement to the handle.

The method comprises the step of communicating the user feedback information to the user at 106. The user feedback information may be communicated to the user during the shave event or after the shave event. The user feedback information may be communicated to a second device 280 as shown in Fig. 2. The second device 280 may comprise a computing device. The computing device may comprise a mobile device, a tablet, a handheld device and/or a desktop device. The desktop device may take the form of a base for holding the shaving razor.

The method may further comprise the step of recommending a behavior to the user at 107. The behavior recommendation may be communicated to a second device 280 as shown in Fig. 2. The second device 20 may comprise a computing device. The computing device may comprise a mobile device, a tablet, a handheld device and/or a desktop device. The desktop device may take the form of a base for holding the shaving razor. The base may also be a re-charging station for the shaving razor.

Referring now to Fig. 5 the recommended behavior is shown in detail at 109. The recommended behavior 109 comprises a maintenance of a user's behavior, a maintenance of a user's shave habit, a change in a user's shave habit, a change in the product to use prior to shaving, a change in the product to use after shaving, a change in the product to use during shaving, a change in the direction a shaving stroke is taken, a change in the length of a shaving stroke, a change in the number of shaving strokes taken, a change in the pressure applied during a shave stroke, a change in the speed of a shave stroke taken, a change in the location where the user shaves, a change in the amount of time taken to prepare the skin and hair for shaving, a change in the temperature of the water used during shaving, a change in the temperature of the water used to prepare the user's skin for shaving, a change in the time of day when the user shaves, a change in the frequency in which the user shaves, a change in the type of hair cutting implement being used during the shave, a change to a new hair cutting implement, a change in the product used on the skin between shaves, a change in the order of location on the body in which strokes are taken, and a change in the area of the user's body to be shaved.

The handle 202 may further comprise a barometric pressure sensor 230 associated with the handle. The barometric sensor 230 is positioned in the handle. The handle 202 may further comprise at least one temperature sensor 232 associated with the handle. The temperature sensor 232 is positioned in the handle. The at least one temperature sensor 232 may comprise a thermistor.

The shaving razor 200 may comprise one or more sensors 240 associated with the hair cutting implement 204. The one or more sensors 240 associated with the hair cutting implement 204 may comprise a switch, an acceleration sensor, a magnetic field sensor, an angular velocity sensor, a velocity sensor, a distance sensor, a proximity sensor, a displacement sensor, a capacitive sensor, an electrical conductance sensor, an electrical resistance sensor, an electrical current sensor, a load sensor, a strain sensor, a friction sensor, a fluid flow sensor, pressure sensor, an atmospheric pressure sensor, a temperature sensor, an optical sensor, an infrared sensor, an acoustic sensor, a vibration sensor, a humidity sensor, a chemical sensor, a particle detector, a bio sensor, an RFID sensor, a NFC sensor and/or a wireless receiver.

The method may further comprise a sensor 245 for detecting the presence of the hair cutting implement 204 on the handle 202.

With the power source 218 on, raw data is collected 104 during the shave event associated with a user from the at least one motion sensor 210. If included the raw data may be collected from the hair cutting implement displacement sensor 214. The raw data is then processed where it is converted into measurements. The measurements may be made by a logic device such as microprocessor. The microprocessor may be located within the handle. Alternatively, the raw data can be sent from communication device 216 to an external device such as a mobile phone, a computer application, a computer or electronic device, such as a base station for holding the shaving razor. The shave event including the presence of a hair cutting implement on the handle is detected from the raw data of the at least one motion sensor 210 and hair cutting implement displacement sensor 214 using an algorithm. The algorithm may comprise monitoring the displacement of the hair cutting implement hair cutting implement displacement sensor 214 while the razor is in a static condition to detect the presence of hair cutting implement 204 connected to the handle 202 via the implement connecting structure 205. The hair cutting implement displacement sensor 214 will reset from a baseline position where no hair cutting implement 204 is attached and the follower 263 is in a fully extended position to a first position where the displacement is in a new at rest position different from the baseline position as the follower is no longer in a fully extended position with the hair cutting implement attached as the follower makes contact with the . The same logic can be used to determine if hair cutting implement 204 has been ejected by looking for a signal on hair cutting implement displacement sensor 214. The algorithm may comprise of monitoring activity as recorded by hair cutting implement displacement sensor 214 or at least one motion sensor 210. For example, if a user starts shaving there would be activation of the hair cutting implement displacement sensor 214 when shaving razor 200 touches the skin on the user's face. With activation of the at least one motion 210 and no activation of the hair cutting implement displacement sensor 214 the event would be rejected as a shave. Also, it can be understood that time between signals and events can be used to determine actions like re-application of shave cream.

In use, the user will grasp handle 202 of shaving razor 200. The power source 218 will power up and power the sensors and devices needing power. The power source 218 may power up automatically upon contact with or movement by user. Alternatively, the power source 218 may power up via an on/off switch. Alternatively, the power source 218 may be constantly on and preferably in a power save mode while not in use and then in full power mode when in use. The user will then shave with shaving razor 200.

As the user shaves, data is collected from the at least one motion sensor 210 and the hair cutting implement displacement sensor 214. The data collected can be used to calculate the pitch and roll of the handle 202 as well as contact data. The data collected may also be used to calculate pressure/load exerted on the hair cutting implement 204, speed of movement of hair cutting implement 204, the number and length of each shaving stroke experienced by hair cutting implement 204, and the total distance or mileage the hair cutting implement 204 has experienced at any given point in time. The collected data may also include the identity of the user or user group. For example, if the handle is being used by more than one user, the data will provide a finger print that indicates that a different user is using the product. Additionally, users can be clustered into different "types" of users based on data from the handle. When the user is finished shaving the shaving razor 200 is put down and data collection stops. The collected data may be transmitted instantaneously as the data is collected via the communication device 216 to a computing device. The computing device may be located in the handle or may be located in a second device such as a mobile device, a tablet, a handheld device or a desktop device such as a base station. Alternatively, the collected data is transmitted after the data from a single shaving event or multiple shaving events has been collected via the communication device 216. The data, whether transmitted instantaneously or after a period of time, can be transmitted through the communication device 216. The communication may be in the form of a color coming from an LED positioned on the handle or base station, such as the color green, indicating that the load being exerted on the hair cutting implement 204 is an acceptable level, the color yellow indicating that the pressure/load being exerted on the hair cutting implement 204 is getting near a maximum pressure/load that is to be exerted on hair cutting implement 204 and the color red indicating that the pressure/load being exerted on the hair cutting implement 204 is exceeding the maximum pressure/load that is to be exerted on hair cutting implement 204.

A rinse of the hair cutting implement 204 can be detected from the raw data of the at least one motion sensor 210 and hair cutting implement displacement sensor 214 using an algorithm. A simple algorithm such as a decision tree (or ensemble of trees), logistic regression, or a recurrent neural network (RNN) can be trained by supervised learning to predict rinse versus no rinse using one or more of the sensor inputs. In some cases, like in RNN, raw sensor signals can be fed in to train the model. In other case like decision trees features like mean, standard deviations, etc. can be calculated to feed into the trained model for prediction.

A shave stroke can be detected from the raw data of the hair cutting implement displacement sensor 214 and the at least one motion sensor 210 using an algorithm. An algorithm looking at activation of hair cutting implement displacement sensor 214 in combination with a certain activity level of the at least one motion sensor 210 to indicate expected motion that represents a shave stroke.

A summary of the shave can be generated from the collected and processed data and can also be fused with other information directly from the consumer to add an extra level of context such as which strokes were made in the direction of the hair grain.

Additional sensors and devices may be used such as an orientation sensor 234, and a clock 235. The shaving razor may also include a memory storage device 241, and an on/off switch 242. Suitable memory storage devices 241 comprise a non-volatile flash memory, a non-volatile flash memory card, a hard disk and/or a volatile DRAM. The on/off switch 242 can be used to control power from the power source to any device and sensor needing power to operate. The on/off switch can control power from the power source to the acceleration sensor, the angular velocity sensor, the magnetic field sensor, the implement displacement sensor, the communication device and any other device and sensor. Suitable on/off switches comprise a mechanical switch, and electronic switch, a capacitive sensor, an accelerometer based trigger, a magnetic reed switch, an optical sensor, and an acoustic sensor.

Suitable temperature sensors 232 comprise a thermistor and a thermocouple. The temperature sensor can be used to measure the temperature of the handle and the head, such as a hair cutting implement, attached to the head.

The additional devices and sensors can be used with the previously identified devices and sensors to collect data on a wide variety of attributes taking place during the shaving event. In use, the use the user will grasp handle 202 of shaving razor 200. The power source 218 will power up and power the sensors needing power. The power source 218 may power up automatically upon contact with or movement by the user. Alternatively, the power source 218 may power up via on/off switch 242. Alternatively, the power source 218 may be constantly on and preferably in a power save mode while not in use and then in full power mode when in use. The user will then shave with shaving razor 200. As the user shaves data is collected from the at least one motion sensor 210, the hair cutting implement displacement sensor 214, and the orientation sensor 234. If included data may also be collected from clock 235, at least one temperature sensor 232, and barometric pressure sensor 230. The data collected may include pitch, roll, yaw, orientation, time data, temperature data, barometric pressure data, as well as contact data. When the user is finished shaving the shaving razor 200 is put down and data collection stops.

The collected data may be transmitted instantaneously as the data is collected via the communication device 216. Alternatively, the collected data may be stored in memory storage device 241. The collected data may be transmitted from memory storage device after the data from a single shaving event or multiple shaving events has been collected via the communication device 216.

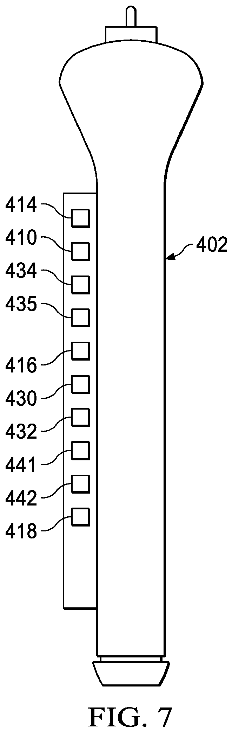

Referring to Fig. 7 there is shown another handle 402. The handle 402 can be used like handle 202 is used with shaving razor 200 shown in Figs. 2 and 3. A hair cutting implement displacement sensor 414 is associated with handle 402. Hair cutting implement displacement sensor 414 is positioned on the handle. At least one motion sensor 410 is associated with handle 402. The at least one motion sensor 410 is positioned on the handle 402. A communication device 416 is associated with handle 402. Communication device is positioned on the handle 402. A power source 418 is associated with the handle 402. Power source 418 is positioned on the handle 402. A barometric pressure sensor 430 is associated with handle 402. Barometric pressure sensor 430 is positioned on the handle 402. A temperature sensor 432 is associated with the handle 402. The temperature sensor 432 is positioned on the handle 402. An orientation sensor 434 is associated with the handle 402. The orientation sensor 434 is positioned on the handle 402. A clock 435 is associated with the handle 402. Clock 435 is positioned on the handle 402. Memory storage 441 is associated with the handle 402. Memory storage 441 is positioned on the handle 402. An on/off switch 442 is associated with the handle 402. On/off switch 442 is positioned in the handle 402.

An example is below:

### EXAMPLE

A. A method for generating user feedback information from a shave event associated with a user comprising the steps of:
   a. providing a shaving razor to a user, the shaving razor comprising;
      i. a handle comprising a connecting structure;
      ii. a hair cutting implement comprising at least one blade, the hair cutting implement being connected to the hair cutting implement connecting structure;
      iii. at least one motion sensor associated with the handle;
      iv. a communication device associated with the handle; and
      v. a power source associated with the handle;
   b. powering the at least one motion sensor, and the communication device via the power source;
   c. collecting user profile data from the user;
   d. collecting shave event data associated with the user during a shave from the at least one motion sensor; and
   e. processing the shave event data and user profile data to generate user feedback information.
B. The method of paragraph A, wherein the user feedback information comprises at least one of the following, a quantity of shaving strokes taken, a type of shaving stroke taken, a direction a shaving stroke was taken, a length of a shaving stroke, a location on a user's body where a shave stroke is taken, a pressure/load exerted during a shave stroke, a speed of a shave stroke, a temperature of the water used during the shave, a time of day when the shave is taken, a total amount of time taken for the shave, a total contact time between the hair cutting implement and the user, a frequency that the user shaves, a sequence in which shaving strokes are taken, a shave stroke map, a count of upward strokes taken, a count of downward strokes taken, a count of the strokes taken with the hair grain, a count of the strokes taken against the hair grain, a count of the number of hair cutting implement rinses, an ejection of the hair cutting implement, a usage status of the hair cutting implement, and an attachment of a new hair cutting implement to the handle.
C. The method of either paragraph A or B, further comprising the step of e) communicating the user feedback information to the user.
D. The method of paragraph C, wherein the user feedback information is communicated to the user during the shave event or after the shave event.
E. The method of paragraph C, wherein the user feedback information is communicated to a computing device.
F. The method of paragraph E, wherein the computing device comprises a mobile device, a tablet, a handheld device and/or a desktop device such as a base station.
G. The method of any one of paragraphs A-F, further comprising the step of e) recommending a behavior to the user.
H. The method of paragraph G, wherein the recommendation is communicated to a computing device.
I. The method of paragraph H, wherein the computing device comprises a mobile device, a tablet, a handheld device and/or a desktop device such as a base station.
J. The method of paragraph G, wherein the recommended behavior comprises a maintenance of a user's behavior, a maintenance of a user's shave habit, a change in a user's shave habit, a change in the product to use prior to shaving, a change in the product to use after shaving, a change in the product to use during shaving, a change in the direction a shaving stroke is taken, a change in the length of a shaving stroke, a change in the number of shaving strokes taken, a change in the pressure/load applied during a shave stroke, a change in the speed of a shave stroke taken, a change in the location where the user shaves, a change in the amount of time taken to prepare the skin and hair for shaving, a change in the temperature of the water used during shaving, a change in the temperature of the water used to prepare the user's skin for shaving, a change in the time of day when the user shaves, a change in the frequency in which the user shaves, a change in the type of hair cutting implement being used during the shave, a change to a new hair cutting implement, a change in the product used on the skin between shaves, a change in the order of location on the body in which strokes are taken, and a change in the area of the user's body to be shaved.
K. The method of any one of paragraphs A-J, wherein the at least one motion sensor comprises an acceleration sensor, an angular velocity sensor, and/or a magnetic field sensor.
L. The method of any one of paragraphs A-K, further comprising a hair cutting implement displacement sensor associated with the handle. The hair cutting implement displacement sensor measures a displacement of the hair cutting implement relative to a fixed position of the handle. The hair cutting implement displacement sensor comprises a switch, a magnetometer, a Hall Effect sensor, a capacitive sensor, an optical sensor, a load sensor, and/or a displacement sensor.
M. The method of any one of paragraphs A-L, further comprising a barometric pressure sensor associated with the handle.
N. The method of any one of paragraphs A-M, further comprising at least one temperature sensor associated with the handle.
O. The method of paragraph N, wherein the at least one temperature sensor comprises a thermistor.
P. The method of any one of paragraphs A-O, wherein the power source comprises a rechargeable battery, a disposable battery or a corded electrical connection.
Q. The method of any one of paragraphs A-P, wherein the shaving razor comprises one or more sensors associated with the hair cutting implement.
R. The method of paragraph Q, wherein the one or more sensors associated with the hair cutting implement comprises a switch, an acceleration sensor, a magnetic field sensor, an angular velocity sensor, a velocity sensor, a distance sensor, a proximity sensor, a displacement sensor, a capacitive sensor, an electrical conductance sensor, an electrical resistance sensor, an electrical current sensor, a load sensor, a strain sensor, a friction sensor, a fluid flow sensor, pressure sensor, an atmospheric pressure sensor, a temperature sensor, an optical sensor, an infrared sensor, an acoustic sensor, a vibration sensor, a humidity sensor, a chemical sensor, a particle detector, a bio sensor, an RFID sensor, a NFC sensor and/or a wireless receiver.
S. The method of any one of paragraphs A-R, further comprising a sensor for detecting the presence of the hair cutting implement on the handle.
T. The method of any one of the paragraphs A-S, wherein the user profile data comprises at least one of the following, a location where the user shaves, an order of shaving relative to bathing and/or showering, a coverage of facial hair, a density of facial hair, a texture of facial hair, a speed at which facial hair grows, a direction of hair growth on a zone of the face, a condition of the users skin, an experience with skin irritation as a result of shaving, an experience with skin redness as a result of shaving, an experience with skin dryness as a result of shaving, an experience with skin tightness as a result of shaving, an experience with ingrown hairs, an experience with razor bumps, an experience with missed hairs when shaving, an experience with not getting close when shaving, an experience with discomfort during shaving, an experience with tug and pull during shaving, a number of typical shaves achieved with the hair cutting implement, a frequency at which the user changes the hair cutting implement, a picture of the user, aspects of their shave experience they would like to improve, a regimen of products used for shaving, an amount of time used with a product for shaving, and a rating of a shave event.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A method for generating user feedback information from a shave event associated with a user comprising the steps (101, 102, 103, 104, 105, 107) of:
a. providing a shaving razor (200) to a user, the shaving razor (200) comprising;
i. a handle (202, 402) comprising a connecting structure (205);
ii. a hair cutting implement (204) comprising at least one blade (207), the hair cutting implement (204) being connected to the connecting structure (205);
iii. at least one motion sensor (210, 410) associated with the handle (202, 402);
iv. a communication device (216, 216A, 416) associated with the handle (202, 402); and
v. a power source (218, 418) associated with the handle (202, 402);
b. powering the at least one motion sensor (210, 410) and the communication device (216, 216A, 416) via the power source (218, 418);
c. collecting user profile data from the user;
d. collecting shave event data associated with the user during a shave from the at least one motion sensor (210, 410); and
e. processing the shave event data and the user profile data to generate user feedback information, **characterized in that**
the method further comprises the step of recommending a behavior to the user, wherein the recommended behavior comprises a maintenance of a user's behavior, a maintenance of a user's shave habit, a change in a user's shave habit, a change in the product to use prior to shaving, a change in the product to use after shaving, a change in the product to use during shaving, a change in the direction a shaving stroke is taken, a change in the length of a shaving stroke, a change in the number of shaving strokes taken, a change in the pressure/load applied during a shave stroke, a change in the speed of a shave stroke taken, a change in the location where the user shaves, a change in the amount of time taken to prepare the skin and hair for shaving, a change in the temperature of the water used during shaving, a change in the temperature of the water used to prepare the user's skin for shaving, a change in the time of day when the user shaves, a change in the frequency in which the user shaves, a change in the type of hair cutting implement (204) being used during the shave, a change to a new hair cutting implement (204), a change in the product used on the skin between shaves, a change in the order of location on the body in which strokes are taken, and a change in the area of the user's body to be shaved.

2. The method of claim 1, wherein the user feedback information comprises at least one of the following, a quantity of shaving strokes taken, a type of shaving stroke taken, a direction a shaving stroke was taken, a length of a shaving stroke, a location on a user's body where a shave stroke is taken, a pressure/load exerted during a shave stroke, a speed of a shave stroke, a temperature of the water used during the shave, a time of day when the shave is taken, a total amount of time taken for the shave, a total contact time between the hair cutting implement (204) and the user, a frequency that the user shaves, a sequence in which shaving strokes are taken, a shave stroke map, a count of upward strokes taken, a count of downward strokes taken, a count of the strokes taken with the hair grain, a count of the strokes taken against the hair grain, a count of the number of hair cutting implement (204) rinses, an ejection of the hair cutting implement (204), a usage status of the hair cutting implement (204), and an attachment of a new hair cutting implement (204) to the handle (202, 402).

3. The method of claim 1 or 2, further comprising the step of e) communicating the user feedback information to the user.

4. The method of claim 3, wherein the user feedback information is communicated to the user during the shave event or after the shave event.

5. The method of claim 3, wherein the user feedback information is communicated to a computing device.

6. The method of claim 5, wherein the computing device comprises a mobile device, a tablet, a handheld device and/or a desktop device.

7. The method of claim 1, wherein the recommendation is communicated to a computing device.

8. The method of claim 7, wherein the computing device comprises a mobile device, a tablet, a handheld device and/or a desktop device.

9. The method of any of the preceding claims, wherein the at least one motion sensor (210, 410) comprises an acceleration sensor, an angular velocity sensor, and/or a magnetic field sensor.

10. The method of any of the preceding claims, wherein the hair cutting implement displacement sensor (214) comprises a switch, a magnetometer (261), a Hall Effect sensor, a capacitive sensor, an optical sensor, a load sensor, and/or a displacement sensor.

11. The method of any of the preceding claims, further comprising a hair cutting implement displacement sensor (214) associated with the handle (202, 402).

12. The method of claim 10, wherein the hair cutting implement displacement sensor (214) measures a displacement of the hair cutting implement (204) relative to a fixed position in the handle (202, 402).

13. The method of any of the preceding claims, further comprising a barometric pressure sensor (230, 430) associated with the handle (202, 402).

14. The method of any of the preceding claims, further comprising at least one temperature sensor (232, 432) associated with the handle (202, 402).

15. The method of any of the preceding claims, wherein the shaving razor (200) comprises one or more sensors (240) associated with the hair cutting implement (204).

16. The method of claim 15, wherein the one or more sensors (240) associated with the hair cutting implement (204) comprises a switch, an acceleration sensor, a magnetic field sensor, an angular velocity sensor, a velocity sensor, a distance sensor, a proximity sensor, a displacement sensor, a capacitive sensor, an electrical conductance sensor, an electrical resistance sensor, an electrical current sensor, a load sensor, a strain sensor, a friction sensor, a fluid flow sensor, pressure sensor, an atmospheric pressure sensor, a temperature sensor, an optical sensor, an infrared sensor, an acoustic sensor, a vibration sensor, a humidity sensor, a chemical sensor, a particle detector, a bio sensor, an RFID sensor a NFC sensor and/or a wireless receiver.

17. The method of any of the preceding claims, further comprising a sensor (245) for detecting the presence of the hair cutting implement (204) on the handle (202, 402).

18. The method of any of the preceding claims, wherein the user profile data comprises at least one of the following, a location where the user shaves, an order of shaving relative to bathing and/or showering, a coverage of facial hair, a density of facial hair, a texture of facial hair, a speed at which facial hair grows, a direction of hair growth on a zone of the face, a condition of the users skin, an experience with skin irritation as a result of shaving, an experience with skin redness as a result of shaving, an experience with skin dryness as a result of shaving, an experience with skin tightness as a result of shaving, an experience with ingrown hairs, an experience with razor bumps, an experience with missed hairs when shaving, an experience with not getting close when shaving, an experience with discomfort during shaving, an experience with tug and pull during shaving, a number of typical shaves achieved with the hair cutting implement (204), a frequency at which the user changes the hair cutting implement (204), a picture of the user, aspects of their shave experience they would like to improve, a regimen of products used for shaving, an amount of time used with a product for shaving, and a rating of a shave event.

## Patentansprüche

1. Verfahren zum Generieren von Benutzer-Rückmeldungsinformationen von einem Rasurereignis, das einem Benutzer zugeordnet ist, umfassend die folgenden Schritte (101, 102, 103, 104, 105, 107):
a. Bereitstellen eines Rasierers (200) für einen Benutzer, wobei der Rasierer (200) umfasst;
i. einen Griff (202, 402) mit einer Verbindungsstruktur (205);
ii. ein Haarschneidegerät (204), umfassend wenigstens eine Klinge (207), wobei das Haarschneidegerät (204) mit der Verbindungsstruktur (205) verbunden ist;
iii. wenigstens einen Bewegungssensor (210, 410), der dem Griff (202, 402) zugeordnet ist;
iv. eine Kommunikationsvorrichtung (216, 216A, 416), die dem Griff (202, 402) zugeordnet ist; und
v. eine Stromquelle (218, 418), die dem Griff (202, 402) zugeordnet ist;
b. Versorgen des wenigstens einen Bewegungssensors (210, 410) und der Kommunikationsvorrichtung (216, 216A, 416) mit Energie über die Stromquelle (218, 418);
c. Sammeln von Benutzerprofildaten vom Benutzer;
d. Sammeln von Rasurereignisdaten, die dem Benutzer während einer Rasur zugeordnet sind, von dem wenigstens einem Bewegungssensor (210, 410); und
e. Verarbeiten der Rasurereignisdaten und der Benutzerprofildaten, um Benutzer-Rückmeldungsinformationen zu generieren, **dadurch gekennzeichnet, dass** das Verfahren ferner den Schritt umfasst, dem Benutzer ein Verhalten zu empfehlen,
wobei das empfohlene Verhalten eine Beibehaltung des Verhaltens eines Benutzers, eine Beibehaltung der Rasiergewohnheit eines Benutzers, eine Änderung der Rasiergewohnheit eines Benutzers, eine Änderung des vor der Rasur zu verwendenden Produkts, eine Änderung des nach der Rasur zu verwendenden Produkts, eine Änderung des während der Rasur zu verwendenden Produkts, eine Änderung der Richtung, in der ein Rasierzug ausgeführt wird, eine Änderung der Länge eines Rasierzuges, eine Änderung der Anzahl der ausgeführten Rasierzüge, eine Änderung des Drucks/der Belastung, der/die während eines Rasierzuges ausgeübt wird, eine Änderung der Geschwindigkeit eines ausgeführten Rasierzuges, eine Änderung der Stelle, an der sich der Benutzer rasiert, eine Änderung der Zeit, die benötigt wird, um die Haut und die Haare für die Rasur vorzubereiten, eine Änderung der Temperatur des während der Rasur verwendeten Wassers, eine Änderung der Temperatur des Wassers, das verwendet wird, um die Haut des Benutzers für die Rasur vorzubereiten, eine Änderung der Tageszeit, zu der sich der Benutzer rasiert, eine Änderung der Häufigkeit, mit der sich der Benutzer rasiert, eine Änderung des Typs des Haarschneidegeräts (204), das während der Rasur verwendet wird, eine Änderung hin zu einem neuen Haarschneidegerät (204), eine Änderung des Produkts, das zwischen den Rasuren auf der Haut verwendet wird, eine Änderung der Reihenfolge der Stellen am Körper, an denen die Züge ausgeführt werden, und eine Änderung des zu rasierenden Körperbereichs des Benutzers umfasst.

2. Verfahren nach Anspruch 1, wobei die Benutzer-Rückmeldungsinformationen wenigstens eines der Folgenden umfassen: eine Anzahl der ausgeführten Rasierzüge, eine Art der ausgeführten Rasierzüge, eine Richtung, in der ein Rasierzug ausgeführt wurde, eine Länge eines Rasierzuges, eine Stelle am Körper eines Benutzers, an der ein Rasierzug ausgeführt wird, ein Druck/eine Belastung, der/die während eines Rasierzuges ausgeübt wird, eine Geschwindigkeit eines Rasierzuges, eine Temperatur des während der Rasur verwendeten Wassers, eine Tageszeit, zu der die Rasur durchgeführt wird, eine Gesamtzeit, die für die Rasur benötigt wird, eine Gesamtkontaktzeit zwischen dem Haarschneidegerät (204) und dem Benutzer, eine Häufigkeit, mit der sich der Benutzer rasiert, eine Reihenfolge, in der Rasierzüge ausgeführt werden, einen Rasierzugplan, eine Zählung der in Wuchsrichtung ausgeführten Züge, eine Zählung der gegen die Wuchsrichtung ausgeführten Züge, eine Zählung der Anzahl von Spülungen des Haarschneidegeräts (204), einen Auswurf des Haarschneidegeräts (204), einen Gebrauchsstatus des Haarschneidegeräts (204) und eine Anbringung eines neuen Haarschneidegeräts (204) am Griff (202, 402).

3. Verfahren nach Anspruch 1 oder 2, ferner umfassend den Schritt e) der Kommunikation der Benutzer-Rückmeldungsinformationen an den Benutzer.

4. Verfahren nach Anspruch 3, wobei die Benutzer-Rückmeldungsinformationen dem Benutzer während des Rasurereignisses oder nach dem Rasurereignis kommuniziert werden.

5. Verfahren nach Anspruch 3, wobei die Benutzer-Rückmeldungsinformationen an eine Rechenvorrichtung kommuniziert werden.

6. Verfahren nach Anspruch 5, wobei die Rechenvorrichtung eine mobile Vorrichtung, ein Tablet, eine Handheld-Vorrichtung und/oder eine Desktop-Vorrichtung umfasst.

7. Verfahren nach Anspruch 1, wobei die Empfehlung an eine Rechenvorrichtung kommuniziert wird.

8. Verfahren nach Anspruch 7, wobei die Rechenvorrichtung eine mobile Vorrichtung, ein Tablet, eine Handheld-Vorrichtung und/oder eine Desktop-Vorrichtung umfasst.

9. Verfahren nach einem der vorstehenden Ansprüche, wobei der wenigstens eine Bewegungssensor (210, 410) einen Beschleunigungssensor, einen Winkelgeschwindigkeitssensor und/oder einen Magnetfeldsensor umfasst.

10. Verfahren nach einem der vorstehenden Ansprüche, wobei der Verschiebungssensor (214) des Haarschneidegeräts einen Schalter, ein Magnetometer (261), einen Hall-Effekt-Sensor, einen kapazitiven Sensor, einen optischen Sensor, einen Lastsensor und/oder einen Wegemesssensor umfasst.

11. Verfahren nach einem der vorstehenden Ansprüche, ferner umfassend einen Wegemessensor (214) für ein Haarschneidegerät, der dem Griff (202, 402) zugeordnet ist.

12. Verfahren nach Anspruch 10, wobei der Wegemesssensor (214) des Haarschneidegeräts eine Verlagerung des Haarschneidegeräts (204) relativ zu einer festen Position im Griff (202, 402) misst.

13. Verfahren nach einem der vorstehenden Ansprüche, ferner umfassend einen dem Griff (202, 402) zugeordneten Luftdrucksensor (230, 430).

14. Verfahren nach einem der vorstehenden Ansprüche, ferner umfassend wenigstens einen dem Griff (202, 402) zugeordneten Temperatursensor (232, 432).

15. Verfahren nach einem der vorstehenden Ansprüche, wobei der Rasierer (200) einen oder mehrere Sensoren (240) umfasst, die dem Haarschneidegerät (204) zugeordnet sind.

16. Verfahren nach Anspruch 15, wobei der eine oder die mehreren dem Haarschneidegerät (204) zugeordneten Sensoren (240) einen Schalter, einen Beschleunigungssensor, einen Magnetfeldsensor, einen Winkelgeschwindigkeitssensor, einen Geschwindigkeitssensor, einen Abstandssensor, einen Näherungssensor, einen Wegemesssensor, einen kapazitiven Sensor, einen Sensor für elektrische Leitfähigkeit, einen Sensor für elektrischen Widerstand, einen elektrischen Stromsensor, einen Lastsensor, einen Dehnungssensor, einen Reibungssensor, einen Flüssigkeitsströmungssensor, einen Drucksensor, einen Luftdrucksensor, einen Temperatursensor, einen optischen Sensor, einen Infrarotsensor, einen akustischen Sensor, einen Vibrationssensor, einen Feuchtigkeitssensor, einen chemischen Sensor, einen Partikeldetektor, einen Biosensor, einen RFID-Sensor, einen NFC-Sensor und/oder einen drahtlosen Empfänger umfasst.

17. Verfahren nach einem der vorstehenden Ansprüche, ferner umfassend einen Sensor (245) zum Erfassen des Vorhandenseins des Haarschneidegeräts (204) am Griff (202, 402).

18. Verfahren nach einem der vorstehenden Ansprüche, wobei die Benutzerprofildaten wenigstens eines der Folgenden umfassen: eine Stelle, an der sich der Benutzer rasiert, eine Reihenfolge der Rasur im Verhältnis zum Baden und/oder Duschen, eine Abdeckung mit Gesichtshaar, eine Dichte des Gesichtshaars, eine Textur des Gesichtshaars, eine Geschwindigkeit, mit der Gesichtshaar wächst, eine Richtung des Haarwuchses in einer Zone des Gesichts, ein Zustand der Haut des Benutzers, eine Erfahrung mit Hautreizung als Folge der Rasur, eine Erfahrung mit Hautrötung als Folge der Rasur, eine Erfahrung mit Hauttrockenheit als Folge der Rasur, eine Erfahrung mit Hautstraffheit als Folge der Rasur, eine Erfahrung mit eingewachsenen Haaren, eine Erfahrung mit Rasierpickeln, eine Erfahrung mit beim Rasieren stehen gelassenen Haaren, eine Erfahrung mit Nicht-Herankommen beim Rasieren, eine Erfahrung mit Unbehagen beim Rasieren, eine Erfahrung mit Ziehen und Zerren beim Rasieren, eine Reihe typischer Rasuren, die mit dem Haarschneidegerät (204) erzielt wurden, eine Häufigkeit, mit der der Benutzer das Haarschneidegerät (204) wechselt, ein Bild des Benutzers, Aspekte seiner Rasiererfahrung, die er verbessern möchte, ein Schema der zum Rasieren verwendeten Produkte, eine Zeitspanne, die mit einem Produkt zum Rasieren verbracht wird, und eine Bewertung eines Rasurereignisses.

## Revendications

1. Procédé de génération d'informations de retour d'utilisateur à partir d'un événement de rasage associé à un utilisateur comprenant les étapes (101, 102, 103, 104, 105, 107) :
a. de fourniture d'un rasoir de rasage (200) à un utilisateur, le rasoir de rasage (200) comprenant :
i. un manche (202, 402) comprenant une structure de raccordement (205) ;
ii. un outil de coupe de poil (204) comprenant au moins une lame (207), l'outil de coupe de poil (204) étant raccordé à la structure de raccordement (205) ;
iii. au moins un capteur de mouvement (210, 410) associé au manche (202, 402) ;
iv. un dispositif de communication (216, 216A, 416) associé au manche (202, 402) ; et
v. une source d'alimentation (218, 418) associée au manche (202, 402) ;
b. d'alimentation de l'au moins un capteur de mouvement (210, 410) et du dispositif de communication (216, 216A, 416) par l'intermédiaire de la source d'alimentation (218, 418) ;
c. de collecte de données de profil utilisateur de l'utilisateur ;
d. de collecte de données d'événement de rasage associées à l'utilisateur pendant un rasage depuis l'au moins un capteur de mouvement (210, 410) ; et
e. de traitement des données d'événement de rasage et des données de profil utilisateur pour générer des informations de retour d'utilisateur, **caractérisé en ce que** le procédé comprend en outre l'étape de recommandation d'un comportement à l'utilisateur,
dans lequel le comportement recommandé comprend une conservation d'un comportement d'utilisateur, une conservation d'une habitude de rasage de l'utilisateur, un changement au niveau d'une habitude de rasage de l'utilisateur, un changement au niveau du produit à utiliser avant le rasage, un changement au niveau du produit à utiliser après le rasage, un changement au niveau du produit à utiliser pendant le rasage, un changement au niveau de la direction prise pour un passage de rasage, un changement au niveau de la longueur d'un passage de rasage, un changement au niveau du nombre de passages de rasage adopté, un changement au niveau de la pression/charge appliquée durant un passage de rasage, un changement au niveau de la vitesse adoptée lors d'un passage de rasage, un changement au niveau de l'emplacement où l'utilisateur se rase, un changement au niveau de la quantité de temps nécessaire pour préparer la peau et le poil au rasage, un changement au niveau de la température de l'eau utilisée durant le rasage, un changement au niveau de la température de l'eau utilisée pour préparer la peau de l'utilisateur pour le rasage, un changement au niveau de l'heure de la journée à laquelle l'utilisateur se rase, un changement au niveau de la fréquence à laquelle l'utilisateur se rase, un changement au niveau du type d'outil de coupe de poil (204) utilisé durant le rasage, un changement vers un nouvel outil de coupe de poil (204), un changement au niveau du produit utilisé sur la peau entre des rasages, un changement de l'ordre d'emplacement sur le corps pour les passages, et un changement de l'aire du corps de l'utilisateur destinée à être rasée.

2. Procédé selon la revendication 1, dans lequel les informations de retour d'utilisateur comprennent au moins l'une des propriétés suivantes, une quantité de passages de rasage, un type de passage de rasage, une direction de passage de rasage, une longueur de passage de rasage, un emplacement sur le corps d'un utilisateur pour le passage de rasage, une pression/charge exercée durant un passage de rasage, une vitesse d'un passage de rasage, la température de l'eau utilisée durant le rasage, une heure de la journée pour la réalisation du rasage, une quantité totale de temps prise pour le rasage, un temps de contact total entre l'outil de coupe de poil (204) et l'utilisateur, une fréquence à laquelle l'utilisateur se rase, un ordre dans lequel les passages de rasage sont exécutés, une carte de passages de rasage, un comptage des passages vers le haut, un comptage des passages vers le bas, un comptage des passages dans le sens du poil, un comptage des passages dans le sens opposé au poil, un comptage du nombre de rinçages de l'outil de coupe de poil (204), une éjection de l'outil de coupe de poil (204), un état d'utilisation de l'outil de coupe de poil (204), et une fixation d'un nouvel outil de coupe de poil (204) au manche (202, 402).

3. Procédé selon la revendication 1 ou 2, comprenant en outre l'étape consistant à e) communiquer les informations de retour d'utilisateur à l'utilisateur.

4. Procédé selon la revendication 3, dans lequel les informations de retour d'utilisateur sont communiquées à l'utilisateur pendant l'événement de rasage ou après l'événement de rasage.

5. Procédé selon la revendication 3, dans lequel les informations de retour d'utilisateur sont communiquées à un dispositif informatique.

6. Procédé selon la revendication 5, dans lequel le dispositif informatique comprend un dispositif mobile, une tablette, un dispositif portable et/ou un dispositif de bureau.

7. Procédé selon la revendication 1, dans lequel la recommandation est communiquée à un dispositif informatique.

8. Procédé selon la revendication 7, dans lequel le dispositif informatique comprend un dispositif mobile, une tablette, un dispositif portable et/ou un dispositif de bureau.

9. Procédé selon l'une quelconque des revendications précédentes, dans lequel l'au moins un capteur de mouvement (210, 410) comprend un capteur d'accélération, un capteur de vitesse angulaire et/ou un capteur de champ magnétique.

10. Procédé selon l'une quelconque des revendications précédentes, dans lequel le capteur de déplacement de l'outil de coupe de poil (214) comprend un commutateur, un magnétomètre (261), un capteur à effet Hall, un capteur capacitif, un capteur optique, un capteur de charge et/ou un capteur de déplacement.

11. Procédé selon l'une quelconque des revendications précédentes, comprenant en outre un capteur de déplacement de l'outil de coupe de poil (214) associé au manche (202, 402).

12. Procédé selon la revendication 10, dans lequel le capteur de déplacement de l'outil de coupe de poil (214) mesure un déplacement de l'outil de coupe de poil (204) par rapport à une position fixe dans le manche (202, 402).

13. Procédé selon l'une quelconque des revendications précédentes, comprenant en outre un capteur de pression barométrique (230, 430) associé au manche (202, 402).

14. Procédé selon l'une quelconque des revendications précédentes, comprenant en outre au moins un capteur de température (232, 432) associé au manche (202, 402).

15. Procédé selon l'une quelconque des revendications précédentes, dans lequel le rasoir de rasage (200) comprend un ou plusieurs capteurs (240) associés à l'outil de coupe de poil (204).

16. Procédé selon la revendication 15, dans lequel les un ou plusieurs capteurs (240) associés à l'outil de coupe de poil (204) comprend un interrupteur, un capteur d'accélération, un capteur de champ magnétique, un capteur de vitesse angulaire, un capteur de vitesse, un capteur de distance, un capteur de proximité, un capteur de déplacement, un capteur capacitif, un capteur de conductance électrique, un capteur de résistance électrique, un capteur de courant électrique, un capteur de charge, un capteur de déformation, un capteur de frottement, un capteur d'écoulement de fluide, un capteur de pression, un capteur de pression atmosphérique, un capteur de température, un capteur optique, un capteur infrarouge, un capteur acoustique, un capteur de vibration, un capteur d'humidité, un capteur chimique, un capteur de particules, un biocapteur, un capteur RFID, un capteur NFC et/ou un récepteur sans fil.

17. Procédé selon l'une quelconque des revendications précédentes, comprenant en outre un capteur (245) pour détecter la présence de l'outil de coupe de poil (204) sur le manche (202, 402).

18. Procédé selon l'une quelconque des revendications précédentes, dans lequel les données de profil utilisateur comprennent au moins l'un des éléments suivants, un emplacement où l'utilisateur se rase, un ordre de rasage par rapport au bain et/ou à la douche, une protection des poils du visage, une densité des poils du visage, une texture des poils du visage, une vitesse de croissance des poils du visage, une direction de pousse des poils sur une zone du visage, une affection de la peau de l'utilisateur, une irritation cutanée suite au rasage, des rougeurs cutanées suite au rasage, une sécheresse de la peau suite au rasage, une tension de la peau suite au rasage, une expérience de poils incarné, une expérience de coups de rasoir, une expérience de poils oubliés lors du rasage, une expérience de rasage peu soigné, une expérience de gêne durant le rasage, une expérience de tiraillements durant le rasage, un certain nombre de rasages typiques obtenu avec l'outil de coupe de poil (204), une fréquence à laquelle l'utilisateur change l'outil de coupe de poil (204), une image de l'utilisateur, des aspects de leur expérience de rasage qu'ils aimeraient améliorer, un régime de produits utilisés pour le rasage, une quantité de temps utilisée avec un produit pour le rasage, et une valeur d'un événement de rasage.
